# EUROPEAN PATENT APPLICATION

(11) **EP 4 729 490 A1**
(43) Date of publication of application: **22.04.2026**
(21) Application number: 24882578.8
(22) Date of filing: 16.07.2024
(51) Int. Cl.: C02F 1/467, C02F 1/44, C02F 1/04, C25B 1/04, C25B 9/19, C25B 15/08, C02F 103/08

(54) **SYSTEM FOR PRODUCING SODIUM HYPOCHLORITE AND HYDROGEN GAS**

(30) Priority: 23.10.2023 KR 20230142216
(71) Applicant: Techwin Co., Ltd., Cheongju-si, Chungcheongbuk-do 28580 (KR)
(72) Inventor: KIM, Jung Sik, Sejong 30098 (KR); CHO, Tae Shin, Cheongju-si, Chungcheongbuk-do 28355 (KR); KIM, Tae Woo, Cheongju-si, Chungcheongbuk-do 28340 (KR); CHOI, Dong Hyuck, Cheongju-si, Chungcheongbuk-do 28491 (KR)
(74) Representative: BCKIP Part mbB
(86) International application number: PCT/KR2024/010150
(87) International publication number: WO 2025/089546

(57) **Abstract**

One aspect of the present invention provides a system for manufacturing sodium hypochlorite and hydrogen gas, comprising: a desalination module generating a fresh water stream and a concentrated water stream by desalinating seawater; a crystallization module generating a solid raw material including sodium chloride by crystallizing the concentrated water stream; an electrolysis module generating sodium hypochlorite and by-product gas by electrolyzing reactants derived from the solid raw material and water; and a gas purification module generating hydrogen gas by purifying the by-product gas.

## Description

### [Technical Field]

The present invention relates to a system for manufacturing sodium hypochlorite and hydrogen gas, and in detail, relates to a system capable of simultaneously manufacturing sodium hypochlorite and hydrogen gas having high purity.

### [Background Art]

Sodium hypochlorite (NaOCl) is applied to various fields such as water supply and drainage, wastewater treatment, seawater electrolysis and ship ballast water treatment, and sterilization and disinfection of agricultural and food products and food materials.

In recent years, in terms of stability, convenience of maintenance, and economic efficiency, on-site type sodium hypochlorite manufacturing devices suitable for small-scale water purification plants have been spotlighted. Such an on-site type sodium hypochlorite manufacturing device can manufacture low-concentration sodium hypochlorite of 0.4 to 1.0% by electrolyzing brine, however, such a sodium hypochlorite manufacturing device has problems in that it is difficult to remove by-products in the process, salt conversion rate and power efficiency are low, and it is difficult to apply to large-capacity facilities due to the low concentration of sodium hypochlorite.

Korean Registered Patent No. 10-1226640, Korean Published Patent No. 10-2012-0002074, and the like disclose an apparatus and/or method capable of manufacturing high-concentration sodium hypochlorite using a diaphragm type electrolyzer, which means an electrolyzer including a diaphragm, however, since purification module of brine (NaCl aqueous solution) supplied to an anode chamber is not provided, ionic impurities such as calcium and magnesium remaining in sodium chloride contaminate an ion exchange membrane of an electrolyzer, thereby decreasing power efficiency and shortening the life of the ion exchange membrane, and there is a problem that it is difficult to control a material balance of brine supplied to the anode chamber only with a conductivity sensor and a temperature sensor.

In addition, in such type of electrolyzer, in an electrochemical reaction of salt (NaCl) and water, consumption of salt is greater than consumption of water, and accordingly, a concentration of saturated brine initially supplied to the anode chamber gradually decreases. In order to respond to such concentration decrease, saturated brine may be injected to maintain the concentration, however, as the volume of anolyte increases, an overflow phenomenon appears, and the overflowed anolyte undergoes a separate regeneration process, which not only increases facilities, costs, and scale due to the regeneration process, but also increases human/material burdens due to use of chemicals such as hydrochloric acid (HCl), sodium hydroxide (NaOH), and residual chlorine neutralizer.

Korean Registered Patent No. 10-2074331 and the like disclose an apparatus for manufacturing high-concentration sodium hypochlorite on site using seawater or artificial brine, however, when a treatment agent is manufactured by supplying seawater as a raw material to an installed electrolyzer, a large amount of scale may occur in facilities including the electrolyzer due to impurities in seawater, it is difficult to easily control a concentration of the treatment agent, and decomposition of the produced disinfectant proceeds rapidly so that the concentration cannot be maintained constant. In addition, an apparatus, method, etc. for producing sodium hypochlorite by using salt, which is a solid raw material, and electrolyzing it have also been proposed, however, salt contains a certain amount of bromide ions (Br⁻) and a by-product called bromate, which is a substance having an adverse effect on the human body, is inevitably included in sodium hypochlorite manufactured using it, and in the case of hydrogen generated as a by-product together with sodium hypochlorite, since it is diluted and released to the atmosphere in reality (30 to 40 kg of by-product hydrogen is generated when 1,000 kg of available chlorine is generated), a necessity of recovering and reusing it has emerged.

Meanwhile, in a seawater desalination facility that produces fresh water by thermally and physically treating seawater, concentrated seawater generated between processes is discharged to the sea as it is (generally, when 1 ton of fresh water is generated, 1 to 1.5 tons of concentrated seawater is generated), and since this may also have an adverse environmental effect, various ways to appropriately use it are being sought.

### [Detailed Description of the Invention]

### [Technical Problem]

The present invention is to solve the above-described problems of the prior art, and an object of the present invention is to provide a system for manufacturing sodium hypochlorite and hydrogen gas capable of implementing and improving productivity, eco-friendliness, and economic efficiency in a balanced manner.

### [Technical Solution]

One aspect of the present invention provides a system for manufacturing sodium hypochlorite and hydrogen gas, including: a desalination module generating a fresh water stream and a concentrated water stream by desalinating seawater; a crystallization module generating a solid raw material including sodium chloride by crystallizing the concentrated water stream; an electrolysis module generating sodium hypochlorite and by-product gas by electrolyzing reactants derived from the solid raw material and water; and a gas purification module generating hydrogen gas by purifying the by-product gas.

In one embodiment, the desalination module may include: a reverse osmosis device generating a permeate stream by removing impurities from the seawater; and a concentration device generating the fresh water stream and the concentrated water stream by removing impurities from the permeate stream.

In one embodiment, the reverse osmosis device may include a nanofiltration membrane that generates the permeate stream by removing sulfate from the seawater while the seawater passes through the reverse osmosis device.

In one embodiment, the concentration device may include: a first concentration device including at least one of a membrane crystallizer and a brine concentrator, which removes solid calcium sulfate dihydrate from the permeate stream as an impurity and generates a first fresh water stream and a first concentrated water stream; a second concentration device precipitating residual sulfate from the first concentrated water stream to generate a second concentrated water stream; and a third concentration device concentrating a concentration of sodium chloride in the second concentrated water stream to a saturation point to generate a second fresh water stream and the concentrated water stream.

In one embodiment, the crystallization module may include at least one of a membrane crystallizer and a brine concentrator, which crystallizes the concentrated water stream to generate the solid raw material and a magnesium-rich stream.

In one embodiment, in the solid raw material, a content of the sodium chloride may be 99 wt% or more, and a content of bromine (Br) may be 300 ppm or less.

In one embodiment, the electrolysis module may include: a raw material supply device including a raw material tank in which the solid raw material is stored, a water supply device providing a water stream to the raw material tank, and a mixing device mixing the solid raw material and the water stream to generate a raw material aqueous solution; and an electrolysis device generating the sodium hypochlorite and the by-product gas by electrolyzing the raw material aqueous solution.

In one embodiment, the electrolysis device is a non-diaphragm type electrolyzer, and the non-diaphragm type electrolyzer may generate a mixture including the sodium hypochlorite and the by-product gas.

In one embodiment, the gas purification module may include: a gas-liquid separation device separating aqueous sodium hypochlorite and gaseous by-product gas from the mixture; and a hydrogen purification device generating hydrogen gas by removing impurities from the by-product gas.

In one embodiment, the electrolysis device may include: a diaphragm type electrolyzer including an anode chamber obtaining an anode product by reacting the raw material aqueous solution, a cathode chamber obtaining a cathode product and the by-product gas by reacting water and cations provided from the anode chamber, and a diaphragm partitioning the anode chamber and the cathode chamber; and a reactor generating sodium hypochlorite by reacting the anode product and the cathode product.

In one embodiment, the gas purification module may include: a moisture adsorption device removing residual moisture in the by-product gas; and a hydrogen purification device generating hydrogen gas by removing impurities from the by-product gas.

In one embodiment, the fresh water stream may be connected to the water supply device.

### [Effect of the Invention]

The system for manufacturing sodium hypochlorite and hydrogen gas according to one aspect of the present invention includes: a desalination module generating a fresh water stream and a concentrated water stream by desalinating seawater; a crystallization module generating a solid raw material including sodium chloride by crystallizing the concentrated water stream; an electrolysis module generating sodium hypochlorite and by-product gas by electrolyzing reactants derived from the solid raw material and water; and a gas purification module generating hydrogen gas by purifying the by-product gas, thereby simultaneously manufacturing sodium hypochlorite and hydrogen gas having high purity.

In particular, the system for manufacturing sodium hypochlorite and hydrogen gas can implement and improve productivity, eco-friendliness, and economic efficiency in a balanced manner by using concentrated seawater, which was discharged and disposed as a by-product during conventional seawater desalination, as one of raw materials used for manufacturing sodium hypochlorite, and at the same time converting hydrogen gas, which was released to the atmosphere as a by-product during sodium hypochlorite manufacturing, into a reusable form.

The effects of the present invention are not limited to the above effects, and should be understood to include all effects inferable from the configuration of the invention described in the detailed description or the claims.

### [Brief Description of the Drawings]

FIG. 1 shows a system for manufacturing sodium hypochlorite and hydrogen gas according to one embodiment of the present invention.
FIG. 2 shows a system for manufacturing sodium hypochlorite and hydrogen gas according to another embodiment of the present invention.
FIG. 3 shows a system for manufacturing sodium hypochlorite and hydrogen gas according to another embodiment of the present invention.

### [Modes of the Invention]

Hereinafter, the present invention will be described with reference to the accompanying drawings. However, the present invention may be implemented in various different forms, and thus is not limited to the embodiments described herein. Also, in order to clearly describe the present invention in the drawings, parts irrelevant to the description are omitted, and similar reference numerals are given to similar parts throughout the specification.

Throughout the specification, when a part is "connected" to another part, this includes not only a case where it is "directly connected" but also a case where it is "indirectly connected" with another member interposed therebetween. In addition, when a part "includes" a component, this means that, unless otherwise stated, it does not exclude other components, but may further include other components.

Hereinafter, embodiments of the present invention will be described in detail with reference to the accompanying drawings.

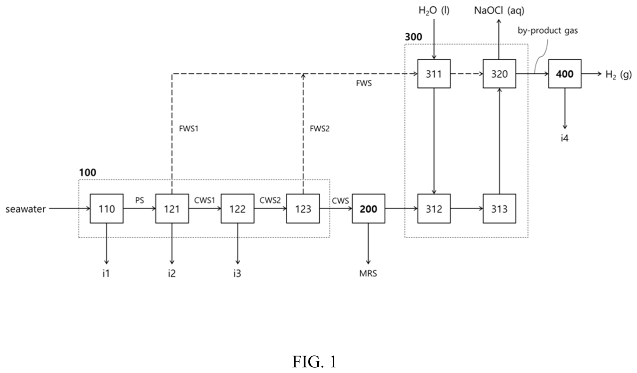

FIG. 1 shows a system for manufacturing sodium hypochlorite and hydrogen gas according to one embodiment of the present invention. Referring to FIG. 1, the system for manufacturing sodium hypochlorite and hydrogen gas according to one embodiment of the present invention may include: a desalination module (100) generating a fresh water stream (FWS, fresh water stream) and a concentrated water stream (CWS, concentrated water stream) by desalinating seawater; a crystallization module (200) generating a solid raw material including sodium chloride by crystallizing the concentrated water stream (CWS); an electrolysis module (300) generating sodium hypochlorite and by-product gas by electrolyzing reactants derived from the solid raw material and water; and a gas purification module (400) generating hydrogen gas by purifying the by-product gas.

The desalination module (100) may generate a fresh water stream (FWS) and a concentrated water stream (CWS) by desalinating seawater. The desalination module (100) may include: a reverse osmosis device (110) generating a permeate stream (PS, permeate stream) by removing impurities from the seawater; and a concentration device generating the fresh water stream (FWS) and the concentrated water stream (CWS) by removing impurities from the permeate stream (PS).

The reverse osmosis device (110) may include a nanofiltration membrane that generates the permeate stream (PS) by removing sulfate from the seawater while the seawater passes through the reverse osmosis device (110). The nanofiltration membrane may have selectivity for filtration of sulfate but low selectivity for filtration of cations. The nanofiltration membrane may reduce a concentration of sulfate in the permeate stream (PS) to a stoichiometric concentration of calcium or less. The impurity (i1) removed in the reverse osmosis device (110) may be sulfate, and this may be discharged from the reverse osmosis device (110) for separate treatment and/or environmentally acceptable disposal.

If necessary, additional reverse osmosis devices (not shown) may be used to further concentrate cations (sodium, calcium, magnesium, etc.) in the permeate stream (PS) and transfer them to the concentration device, and by-products generated here may also be discharged for separate treatment and/or environmentally acceptable disposal.

The concentration device may generate the fresh water stream (FWS) and the concentrated water stream (CWS) by removing impurities from the permeate stream (PS). The concentration device may include: a first concentration device (121) including at least one of a membrane crystallizer and a brine concentrator, which removes solid calcium sulfate dihydrate as an impurity (i2) from the permeate stream (PS) and generates a first fresh water stream (FWS1) and a first concentrated water stream (CWS1); a second concentration device (122) precipitating residual sulfate from the first concentrated water stream (CWS1) to generate a second concentrated water stream (CWS2); and a third concentration device (123) concentrating a concentration of sodium chloride in the second concentrated water stream (CWS2) to a saturation point to generate a second fresh water stream (FWS2) and the concentrated water stream (CWS).

The first concentration device (121) may include at least one of a membrane crystallizer and a brine concentrator, which removes solid calcium sulfate dihydrate from the permeate stream (PS) as an impurity (i2) and generates the first fresh water stream (FWS1) and the first concentrated water stream (CWS1).

The first fresh water stream (FWS1) contains a trace amount of salt or substantially does not contain it, and thus may be discharged to the outside of the first concentration device (121), or may be connected to the water supply device (311) of the electrolysis module (300) and used to manufacture a raw material aqueous solution input to the electrolysis device (320).

The first concentrated water stream (CWS1) is obtained by removing solid calcium sulfate dihydrate and the first fresh water stream (FWS1) from the permeate stream (PS), and a concentration of cations (sodium, magnesium, etc.) excluding calcium in the first concentrated water stream (CWS1) may be further concentrated compared to the permeate stream (PS).

The second concentration device (122) may precipitate residual sulfate (i3) from the first concentrated water stream (CWS1) to generate the second concentrated water stream (CWS2). The first concentrated water stream (CWS1) is derived from the permeate stream (PS) generated in the reverse osmosis device (110), and trace sulfate may still remain in the first concentrated water stream (CWS1). With respect to this, the second concentration device (122) may inject a soluble salt of an alkaline earth metal into the first concentrated water stream (CWS1) to precipitate an insoluble salt. The insoluble salt may be removed from the second concentration device (122), and the second concentrated water stream (CWS2) generated thereby may be transferred to the third concentration device (123). For example, the soluble salt may be barium chloride and/or barium hydroxide, and the insoluble salt may be barium sulfate, but not limited thereto.

The third concentration device (123) may concentrate a concentration of sodium chloride in the second concentrated water stream (CWS2) to a saturation point to generate the second fresh water stream (FWS2) and the concentrated water stream (CWS).

The second fresh water stream (FWS2) contains a trace amount of salt or substantially does not contain it, and thus may be discharged to the outside of the third concentration device (123), or may be connected to the water supply device (311) of the electrolysis module (300) and used to manufacture a raw material aqueous solution input to the electrolysis device (320).

The concentrated water stream (CWS) is generated by concentrating the concentration of sodium chloride in the second concentrated water stream (CWS2) to a saturation point, and the concentration here may also be performed by devices such as a membrane crystallizer, an evaporation concentrator, and a heat treatment device. In general, since a saturation concentration of sodium chloride is about 360,000 ppm, in order for the concentration of sodium chloride in the second concentrated water stream (CWS2) to reach this, a content of total dissolved solids (TDS) in the second concentrated water stream (CWS2) may be concentrated to be 200,000 ppm or more, preferably 250,000 ppm or more.

The crystallization module (200) may include at least one of a membrane crystallizer and an evaporation concentrator, which crystallizes the concentrated water stream (CWS) to generate the solid raw material and a magnesium-rich stream (MRS, magnesium-rich stream). The solid raw material is obtained by crystallizing a stream in which magnesium in the concentrated water stream (CWS) is substantially removed, and the solid raw material may be highly purified sodium chloride. The magnesium-rich stream (MRS) may be transferred to a process for generating a useful material derived from magnesium, or may be discharged from the crystallization module (200) for separate treatment and/or environmentally acceptable disposal.

In the solid raw material, a content of the sodium chloride may be 99 wt% or more, preferably 99.5 wt% or more, and a content of bromine (Br) may be 300 ppm or less, preferably 250 ppm or less, more preferably 230 ppm or less. In addition, in the solid raw material, concentrations of calcium (Ca) and magnesium (Mg) may each be 5,000 ppm or less, preferably 3,000 ppm or less, more preferably 2,000 ppm or less, and an insoluble content in the solid raw material may be 0.5 wt% or less, preferably 0.2 wt% or less. By maximizing the content of sodium chloride in the solid raw material and minimizing contents of other impurities such as bromine, calcium, and magnesium to increase the purity of the solid raw material, it is possible to appropriately solve problems such as generation of a large amount of scale in facilities including the electrolysis module (300) due to impurities, difficulty in easily controlling concentration and purity of sodium hypochlorite, acceleration of decomposition of manufactured sodium hypochlorite, and excessive generation of bromate, which is a harmful substance in sodium hypochlorite.

The electrolysis module (300) may include: a raw material supply device including a raw material tank (312) in which the solid raw material is stored, a water supply device (311) providing a water stream to the raw material tank (312), and a mixing device (313) mixing the solid raw material and the water stream to generate a raw material aqueous solution; and an electrolysis device (320) generating sodium hypochlorite and by-product gas by electrolyzing the raw material aqueous solution.

The raw material supply device may include a raw material tank (312) in which the solid raw material, for example, salt is stored, a water supply device (311) providing a water stream to the raw material tank (312), and a mixing device (313) mixing the solid raw material and the water stream to generate a raw material aqueous solution.

The raw material tank (312) may store the solid raw material generated in the crystallization module (200), for example, salt, and the mixing device (313) may mix the solid raw material and the water stream consisting of tap water, purified water (pure water or higher), and/or the fresh water stream (FWS) provided from the water supply device (311) to generate a raw material aqueous solution having a predetermined concentration, preferably brine, more preferably saturated brine (sodium chloride saturated aqueous solution), and provide it to the electrolysis device (320).

The water stream provided from the water supply device (311) may consist of tap water, purified water, and/or the fresh water stream (FWS). Such tap water, purified water, and/or the fresh water stream (FWS) may be stored in a water tank provided upstream of the water supply device (311), and may be provided to the raw material tank (312) by the water supply device (311).

The water supply device (311) may not include any module for filtering and purifying water, for example, expensive auxiliary devices such as filters, and directly provides stored tap water, purified water, and/or the fresh water stream (FWS) to the raw material tank (312), thereby simplifying and downsizing the system as a whole and improving maintainability, economic efficiency, efficiency, etc.

The mixing device (313) may generate the raw material aqueous solution by mixing the water stream consisting of stored tap water, purified water, and/or the fresh water stream (FWS) and the solid raw material stored in the raw material tank (312) at a predetermined ratio.

The raw material aqueous solution includes an electrolyte and water, which are raw materials of sodium hypochlorite, and the solid raw material is highly purified sodium chloride, and water is the fresh water stream (FWS) treated in the desalination module (100) or treated by another method, and since it substantially does not include impurities, unnecessary scale generated in the electrolysis module (300) by such impurities can be effectively prevented, and by adjusting the amount of the raw material aqueous solution or the applied current, the concentration of the sodium hypochlorite aqueous solution obtained through the electrolysis device (320) can be easily and precisely controlled.

The mixing device (313) may include a raw material aqueous solution treatment device (not shown). The raw material aqueous solution treatment device can increase efficiency of an electrolysis reaction by removing residual impurities such as calcium and magnesium included in the raw material aqueous solution, for example, saturated brine generated in the mixing device (313), thereby preventing contamination of the electrolysis device (320) in advance, and may contribute to increasing durability and lifetime of the electrolysis device (320).

In addition, the raw material aqueous solution treatment device may include: a heating unit provided with a heater in a tank of a predetermined standard, a pH adjusting unit, and a water softening device (not shown) provided with a chelate resin capable of adsorbing and removing impurities in the raw material aqueous solution that has passed through the heating unit. The heating unit may improve adsorption efficiency of the water softening device by appropriately maintaining temperature, pH, etc. of an unpurified raw material aqueous solution, for example, saturated brine. For example, an appropriate temperature and pH of the saturated brine may be 50 to 80°C and 9 or more, respectively, but not limited thereto.

The electrolysis device (320) may generate sodium hypochlorite and by-product gas by electrolyzing the raw material aqueous solution. A generation process of sodium hypochlorite by electrolysis of brine as the raw material aqueous solution, preferably saturated brine (sodium chloride saturated aqueous solution), is as follows.

When sodium chloride saturated aqueous solution flows into the electrolysis device (320), at an anode, an oxidation reaction in which chloride ions (Cl⁻) that are anions in sodium chloride are converted to chlorine gas (Cl₂) occurs, and at a cathode, a reduction reaction in which water (H₂O) is converted to hydrogen gas (H₂) and hydroxide ions (OH⁻) occurs.

Chlorine gas and hydroxide ions generated at the anode and cathode, respectively, form hypochlorite ions (OCl⁻) or hypochlorous acid (HOCl) through a chemical reaction in a reactor (324) (or a reaction part) provided inside and/or outside the electrolysis device (320). At this time, hypochlorite ions and hypochlorous acid maintain a chemical equilibrium state depending on pH. When sodium chloride (NaCl) is used, hypochlorite ions (OCl⁻) combine with sodium ions (Na⁺) to generate sodium hypochlorite (NaOCl).

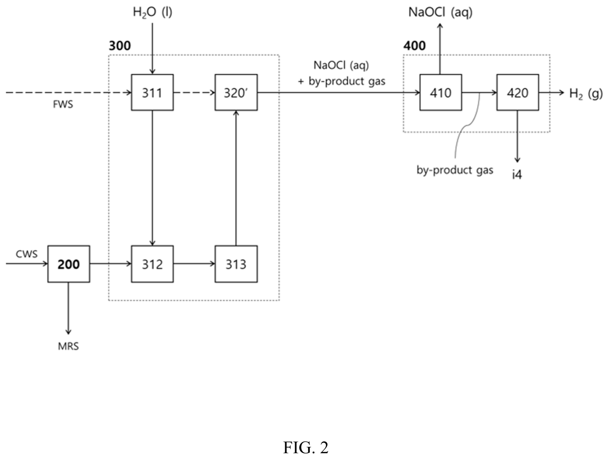

FIG. 2 shows a system for manufacturing sodium hypochlorite and hydrogen gas according to another embodiment of the present invention. Referring to FIG. 2, the electrolysis device is a non-diaphragm type electrolyzer (320'), and the non-diaphragm type electrolyzer (320') may generate a mixture including sodium hypochlorite and by-product gas.

In the non-diaphragm type electrolyzer (320'), the above-described oxidation and reduction reactions occur at the anode and cathode, respectively, and a reaction between chlorine gas and hydroxide ions occurs in a bulk phase inside the non-diaphragm type electrolyzer (320'), so that a mixture including sodium hypochlorite and by-product gas may be generated.

Here, the gas purification module (400) may include: a gas-liquid separation device (410) separating aqueous sodium hypochlorite and gaseous by-product gas from the mixture; and a hydrogen purification device (420) generating hydrogen gas by removing impurities from the by-product gas.

The gas-liquid separation device (410) may be a cyclone-type separator. This can separate gaseous by-product gas from the liquid mixture by generating vortices by rotation.

The hydrogen purification device (420) may generate high-purity hydrogen gas by removing impurities (i4) in the by-product gas, for example, moisture, water vapor, oxygen gas, fume, etc. As a process or method for removing such impurities, physical, chemical, biological, and a combination of two or more thereof may be applied, but not limited thereto.

The hydrogen gas generated in the hydrogen purification device (420) may, if necessary, be used as a raw material for driving a fuel cell through a predetermined processing device (not shown), or may be converted to water by contacting a hydrogen oxidation catalyst and then circulated to the water supply device (311), or may be appropriately diluted and discharged to the outside. The processing device may include, for example, a leakage alarm, a discharge sill, a catalytic reactor and/or a neutralizer that renders leaked hydrogen gas harmless, a device preventing diffusion through absorption and/or adsorption, etc., but not limited thereto.

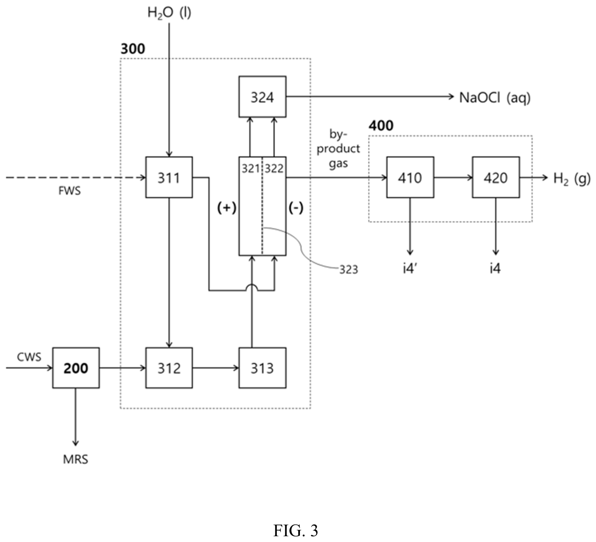

FIG. 3 shows a system for manufacturing sodium hypochlorite and hydrogen gas according to another embodiment of the present invention. Referring to FIG. 3, the electrolysis device may include: a diaphragm type electrolyzer including an anode chamber (321) obtaining an anode product by reacting the raw material aqueous solution, a cathode chamber (322) obtaining a cathode product and by-product gas by reacting water and cations provided from the anode chamber (321), and a diaphragm (323) partitioning the anode chamber (321) and the cathode chamber (322); and a reactor (324) generating sodium hypochlorite by reacting the anode product and the cathode product.

The diaphragm type electrolyzer may include an anode chamber (321) obtaining an anode product by reacting the raw material aqueous solution, a cathode chamber (322) obtaining a cathode product and by-product gas by reacting water and cations provided from the anode chamber (321), preferably metal ions, more preferably sodium ions (Na⁺), and a diaphragm (323) partitioning the anode chamber (321) and the cathode chamber (322).

The anode chamber (321) may include an anode, and may carry an anode product including anolyte and gaseous materials generated by an electrolysis reaction at the anode. Also, the cathode chamber (322) may include a cathode, and may carry the cathode product and by-product gas generated by an electrolysis reaction at the cathode.

When the raw material aqueous solution is brine, preferably saturated brine, if a predetermined voltage is applied to the diaphragm type electrolyzer, the following substances may be generated in the anode chamber (321) and the cathode chamber (322).

In the anode chamber (321), saturated brine having a predetermined concentration is electrolyzed to generate sodium ions (Na⁺), chlorine gas (Cl₂), and chloride ions (Cl⁻), and in the cathode chamber (322), water is electrolyzed to generate hydrogen gas (H₂) and hydroxide ions (OH⁻). Sodium ions generated in the anode chamber (321) may move to the cathode chamber (322) by chemically and/or physically permeating the diaphragm (323), and may react with hydroxide ions generated in the cathode chamber (322) to generate sodium hydroxide. As used herein, the term "chemical permeation" means that an ionic material having a predetermined charge permeates a diaphragm through chemical module such as an ion exchange reaction, and "physical permeation" means that a material permeates a diaphragm by overcoming physical and structural factors of the diaphragm such as a pore size provided in the diaphragm and a thickness of the diaphragm. Sodium hydroxide generated in the cathode chamber (322) may be used as a reactant for generating sodium hypochlorite, and if necessary, may also be used as a buffer for increasing storage stability by adjusting pH of the generated sodium hypochlorite aqueous solution.

The diaphragm (323) may be a cation exchange membrane. The cation exchange membrane may be a flexible cation exchange membrane made of a polymer film. The cation exchange membrane may allow cations generated in the anode chamber (321), for example, sodium ions, to permeate and move to the cathode chamber (322) by an ion exchange reaction with functional groups provided in the cation exchange membrane. In addition, if necessary, the cation exchange membrane may include an additional layer and/or functional groups capable of preventing hydroxide ions generated in the cathode chamber (322) from permeating and moving to the anode chamber (321).

The reactor (324) may generate sodium hypochlorite by reacting the anode product generated in the anode chamber (321) of the diaphragm type electrolyzer, for example, chlorine gas, and the cathode product generated in the cathode chamber (322), for example, sodium hydroxide. The reactor (324) may be an independent device or facility connected to the upstream diaphragm type electrolyzer through piping, etc., or although not shown, may be integrally provided with the upstream diaphragm type electrolyzer without separate piping.

In the latter case, sodium hypochlorite may be generated by providing a portion of an inside of the diaphragm type electrolyzer as a space in which the anode product and the cathode product are collected and reacting them. In addition, when the reactor (324) and the diaphragm type electrolyzer are integrally provided, devices or facilities for circulating at least some of the anode product and/or the cathode product, which are essentially provided in the conventional diaphragm type electrolyzer, back to the anode chamber (321) and/or the cathode chamber (322), may be appropriately omitted, thereby simplifying and downsizing the system as a whole and improving maintainability, economic efficiency, efficiency, etc.

A concentration of sodium hypochlorite aqueous solution obtained in the reactor (324) may be 0.01 to 50 wt%, preferably 0.1 to 30 wt%, more preferably 0.2 to 15 wt%.

When the electrolysis device is the diaphragm type electrolyzer, the gas purification module (400) may include: a moisture adsorption device (410) connected to the cathode chamber (322) to remove residual moisture (i4') in by-product gas generated in the cathode chamber (322); and a hydrogen purification device (420) generating high-purity hydrogen gas by removing impurities (i4) in the by-product gas from which residual moisture is removed, for example, water vapor, oxygen gas, fume, etc. As a process or method for removing such impurities, physical, chemical, biological, and a combination of two or more thereof may be applied, but not limited thereto.

The hydrogen gas generated in the hydrogen purification device (420) may, if necessary, be used as a raw material for driving a fuel cell through a predetermined processing device (not shown), or may be converted to water by contacting a hydrogen oxidation catalyst and then circulated to the water supply device (311), or may be appropriately diluted and discharged to the outside. The processing device may include, for example, a leakage alarm, a discharge sill, a catalytic reactor and/or a neutralizer that renders leaked hydrogen gas harmless, a device preventing diffusion through absorption and/or adsorption, etc., but not limited thereto.

The above description of the present invention is for illustration, and a person having ordinary knowledge in the art to which the present invention pertains can understand that various modifications can be easily made into other specific forms without changing the technical spirit or essential features of the present invention. Therefore, the embodiments described above should be understood in all respects as illustrative and not restrictive. For example, each component described as a single form may be implemented in a distributed manner, and likewise, components described as distributed may also be implemented in a combined form.

The scope of the present invention is defined by the claims that follow, and all modifications or variations derived from the meaning and scope of the claims and their equivalents should be construed as being included within the scope of the present invention.

**<Description of Reference Numerals>**

| | | | |
|---|---|---|---|
| 100: | desalination module | 110: | reverse osmosis device |
| 121: | first concentration device | 122: | second concentration device |
| 123: | third concentration device | 200: | crystallization module |
| 300: | electrolysis module | 311: | water supply device |
| 312: | raw material tank | 313: | mixing device |
| 320: | electrolysis device | 320': | non-diaphragm type electrolyzer |
| 321: | anode chamber | 322: | cathode chamber |
| 323: | diaphragm | 324: | reactor |
| 400: | gas purification module device/moisture adsorption device | 410: | gas-liquid separation |
| 420: | hydrogen purification device | PS: | permeate stream |
| FWS, FWS1, FWS2: | fresh water stream | CWS, CWS1, CWS2: | concentrated water stream |
| MRS: | magnesium-rich stream | i1, i2, i3, i4: | impurities |
| i4': | residual moisture | | |

## Claims

1. A system for manufacturing sodium hypochlorite and hydrogen gas, comprising:
a desalination module generating a fresh water stream and a concentrated water stream by desalinating seawater;
a crystallization module generating a solid raw material including sodium chloride by crystallizing the concentrated water stream;
an electrolysis module generating sodium hypochlorite and by-product gas by electrolyzing reactants derived from the solid raw material and water; and
a gas purification module generating hydrogen gas by purifying the by-product gas.

2. The system according to claim 1,
wherein the desalination module comprises:
a reverse osmosis device generating a permeate stream by removing impurities from the seawater; and
a concentration device generating the fresh water stream and the concentrated water stream by removing impurities from the permeate stream.

3. The system according to claim 2,
wherein the reverse osmosis device comprises a nanofiltration membrane that generates the permeate stream by removing sulfate from the seawater while the seawater passes through the reverse osmosis device.

4. The system according to claim 2,
wherein the concentration device comprises:
a first concentration device including at least one of a membrane crystallizer and a brine concentrator, which removes solid calcium sulfate dihydrate from the permeate stream to generate a first fresh water stream and a first concentrated water stream;
a second concentration device precipitating residual sulfate from the first concentrated water stream to generate a second concentrated water stream; and
a third concentration device concentrating a concentration of sodium chloride in the second concentrated water stream to a saturation point to generate a second fresh water stream and the concentrated water stream.

5. The system according to claim 1,
wherein the crystallization module comprises at least one of a membrane crystallizer and a brine concentrator, which crystallizes the concentrated water stream to generate the solid raw material and a magnesium-rich stream.

6. The system according to claim 1,
wherein in the solid raw material, a content of the sodium chloride is 99 wt% or more, and a content of bromine (Br) is 300 ppm or less.

7. The system according to claim 1,
wherein the electrolysis module comprises:
a raw material supply device including a raw material tank in which the solid raw material is stored, a water supply device providing a water stream to the raw material tank, and a mixing device mixing the solid raw material and the water stream to generate a raw material aqueous solution; and
an electrolysis device generating the sodium hypochlorite and the by-product gas by electrolyzing the raw material aqueous solution.

8. The system according to claim 7,
wherein the electrolysis device is a non-diaphragm type electrolyzer, and
the non-diaphragm type electrolyzer generates a mixture including the sodium hypochlorite and the by-product gas.

9. The system according to claim 8,
wherein the gas purification module comprises:
a gas-liquid separation device separating aqueous sodium hypochlorite and gaseous by-product gas from the mixture; and
a hydrogen purification device generating the hydrogen gas by removing impurities from the by-product gas.

10. The system according to claim 7,
wherein the electrolysis device comprises:
a diaphragm type electrolyzer including an anode chamber obtaining an anode product by reacting the raw material aqueous solution, a cathode chamber obtaining a cathode product and the by-product gas by reacting water and cations provided from the anode chamber, and a diaphragm partitioning the anode chamber and the cathode chamber; and
a reactor generating the sodium hypochlorite by reacting the anode product and the cathode product.

11. The system according to claim 10,
wherein the gas purification module comprises:
a moisture adsorption device removing residual moisture in the by-product gas; and
a hydrogen purification device generating the hydrogen gas by removing impurities from the by-product gas.

12. The system according to claim 7,
wherein the fresh water stream is connected to the water supply device.
